# FASCICULE DE BREVET EUROPEEN

(11) **EP 3 988 198 B1**
(45) Date de publication et mention de la délivrance du brevet: **03.01.2024**
(21) Numéro de dépôt: 21202983.9
(22) Date de dépôt: 15.10.2021
(51) Int. Cl.: B01D 53/22, B01D 53/00, C10L 3/10, B01D 53/30

(54) **DISPOSITIF ET PROCÉDÉ D'AJUSTEMENT DES ÉQUIPEMENTS D'UNE INSTALLATION DE PRODUCTION DE BIOMÉTHANE**
VORRICHTUNG UND VERFAHREN ZUM ABGLEICHEN DER GERÄTE EINER ANLAGE ZUR ERZEUGUNG VON BIOMETHAN
DEVICE AND PROCESS FOR ADJUSTING THE EQUIPMENT OF A FACILITY FOR PRODUCING BIOMETHANE

(30) Priorité: 23.10.2020 FR 2010904
(43) Date de publication de la demande: 27.04.2022
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: MANGEANT, Baptiste, 38360 Sassenage (FR)
(74) Mandataire: Air Liquide

(56) Documents cités:
- WO-A1-2020/156902
- US-A1- 2012 000 355
- US-A1- 2015 336 046

## Description

La présente invention concerne le domaine de l'épuration du biogaz en biométhane par un procédé de perméation menbranaire, en particulier l'épuration du biogaz dans le but de produire du biométhane conforme aux spécifications pour l'injection dans un réseau de gaz naturel.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH₄) et du dioxyde de carbone (CO₂) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO₂, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL)...

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Lorsqu'un exploitant cherche à augmenter sa production de biométhane pour la vendre à un opérateur de réseau de gaz, il souhaite généralement le faire en ne conservant qu'un seul point d'injection au réseau et sans remplacer son installation. Partant de là, un problème qui se pose est de fournir un moyen de gérer une installation de production de biométhane en fonction du besoin client.

Les documents US2012/000355 A1, WO 2020/156902 A1 et US 2015/336046 A1 sont aussi concernés par l'optimisation d'un processus de séparation membranaire de biogaz pour produire du biométhane. Néanmoins aucun desdits documents n'enseigne un dispositif comprenant un processeur configuré pour piloter plusieurs unités de séparation membranaire de même nature en parallèle dans une installation de production de biométhane.

Une solution de la présente invention est un dispositif d'ajustement des unités de séparation membranaire d'une installation I de production de biométhane à partir d'un flux de biogaz comprenant du méthane et du dioxyde de carbone, ledit dispositif comprenant :
- Un moyen de commande apte à recevoir au moins une donnée D du flux de biogaz à traiter ou du flux de biométhane et à transmettre cette donnée D sous forme d'un signal à un processeur P du dispositif,
- Le processeur P étant configuré pour exécuter un algorithme pour :
   - Comparer la donnée D avec une valeur seuil,
   - Déterminer l'écart entre la valeur seuil et la donnée D et
   - Ajuster le nombre d'unités de séparation membranaire de même nature en parallèle dans l'installation I en fonction de l'écart déterminé et
   - Ajuster la capacité de fonctionnement de chaque unité de séparation membranaire en fonction de l'écart déterminé,
   Avec l'algorithme étant configuré pour ajuster la capacité de fonctionnement des unités de séparation membranaire en parallèle par hystérésis.

De préférence, la donnée D correspond au débit du flux de biométhane.

Selon le cas le dispositif selon l'invention peut présenter une ou plusieurs des caractéristiques ci-dessous :
- les équipements de l'installation comprennent au moins un digesteur, au moins un compresseur, et au moins une unité de séparation membranaire ;
- l'installation I comprend un seul poste d'injection du biométhane dans un réseau aval de gaz ;
- l'algorithme ajuste le nombre d'unités de séparation membranaire de même nature en parallèle dans l'installation I en fonction de l'écart déterminé, en pilotant des ouvertures ou fermetures de vannes dans l'installation I ;
- le moyen de commande comprend des moyens d'affichage configurés pour afficher la donnée D ;
- le moyen de commande comprend des moyens de saisies permettant à un utilisateur de modifier la donnée D affichée par les moyens d'affichage ;
- l'algorithme est tel que lorsque la donnée D est inférieure à la valeur seuil le nombre d'équipements de même nature en parallèle dans l'installation I est égale à zéro ;
- l'algorithme est tel que lorsque la donnée D est supérieure à la valeur seuil le nombre d'unités de séparation membranaire de même nature en parallèle dans l'installation I est supérieur à deux ;
- l'algorithme est tel que lorsque la donnée D est supérieure de X % par rapport à la valeur seuil, parmi les au moins deux unités de séparation membranaire de même nature en parallèle au moins une des deux unités de séparation membranaire fonctionnera à X% tandis que l'autre fonctionnera à 100%.

La présente invention a également pour objet un procédé d'ajustement des unités de séparation membranaire d'une installation I de production de biométhane à partir d'un flux de biogaz comprenant du méthane et du dioxyde de carbone, ledit procédé utilisant le dispositif selon l'invention et comprenant les étapes suivantes:
a) Choisir une donnée D du flux de biogaz à traiter ou du flux de biométhane,
b) Comparer cette donnée D avec une valeur seuil,
c) Déterminer l'écart entre la valeur seuil et la donnée D,
d) Ajuster le nombre d'unités de séparation membranaire de même nature en parallèle dans l'installation I en fonction de l'écart déterminée et
e) Ajuster la capacité de fonctionnement de chaque unité de séparation membranaire en fonction de l'écart déterminé.

De manière préférentielle, l'installation comprend au moins un premier digesteur, au moins un premier compresseur, au moins une première unité de séparation membranaire et un poste d'injection du biométhane dans un réseau aval de gaz ; et lorsque à l'étape c) il est déterminé que la donnée D est supérieure à la valeur seuil à l'étape d) on met en œuvre une seconde unité de séparation membranaire en parallèle à la première unité de séparation membranaire.

La donnée D correspond de préférence au débit du flux de biogaz à traiter ou du flux de biométhane.

Pour augmenter la production de biogaz, un exploitant peut donc augmenter le nombre de ses digesteurs. Par la suite, pour épurer le biogaz, la solution technique consiste :
- Soit à installer deux unités d'épuration en parallèle, connectées en amont en amont à un seul point d'injection au réseau,
- Soit, si le dimensionnement de l'unité de séparation de membranes le permet, à installer un deuxième compresseur en parallèle du premier.

Considérons le cas où est mis en oeuvre une seconde unité de séparation membranaire en parallèle à la première unité de séparation membranaire, la capacité globale de fonctionnement de l'installation peut varier de 0 à 200%. Nous nommons la capacité locale de fonctionnement la capacité propre de fonctionnement à chaque équipement. Nous faisons l'hypothèse que les deux unités de séparation membranaire sont strictement identiques, en ce sens qu'elles traitent exactement la même quantité de gaz. Chacune des deux unités de séparation membranaire présente alors une capacité locale de fonctionnement de 0 à 100%.

La situation est équivalente dans le cas où est mis en oeuvre un second compresseur en parallèle au premier compresseur.

Les situations sont également équivalentes dans les cas où sont mis en oeuvre plus de deux unités de séparation membranaire en parallèle et/ou plus de deux compresseurs en parallèle.

Une première manière de répartir le flux de biogaz sur les deux unités de séparation membranaire consiste à répartir la moitié du flux sur chaque unité : si par exemple le débit du flux de biogaz à traiter (donnée D) requis par l'exploitant est supérieur de X% à la valeur seuil, chaque unité de séparation membranaire régule sa capacité locale de fonctionnement à (valeur seuil + X%)/2, autrement dit, si la valeur seuil est fixée à 100%, et si l'exploitant requiert un débit du flux de biogaz à traiter supérieur de 20% à la valeur seuil, chaque unité de séparation membranaire traitera 60% du flux de biogaz.

Cependant cette première manière n'est pas adaptée aux exploitations dans lesquelles les débits de flux de biogaz à traiter ou du flux de biométhane (donnée D) requis par l'exploitant oscillent souvent entre 100 et 200% de la valeur seuil. En effet, cette première manière présente plusieurs inconvénients :
- Les unités de séparation membranaire, comme toute installation industrielle, ont une plage optimale de consommation d'énergie (i.e une plage de points de fonctionnement pour lesquels le rapport de l'énergie consommée par volume de biogaz traité est minimum). Généralement, l'unité de séparation membranaire est conçue pour que cette plage de fonctionnement optimale se trouve entre le régime nominal de l'installation et son régime maximal. Si le flux de biogaz est réparti uniformément entre les unités de séparation membranaire, il existe une large plage de flux de biogaz à traiter ou du flux de biométhane (donnée D) requis sur laquelle les unités de séparation membranaire ne se trouvent pas dans leur plage optimale de consommation d'énergie.
- Les unités d'épuration du biogaz par perméation membranaire ont aussi une plage optimale de rendement de conversion du méthane (i.e une plage de points de fonctionnement pour lesquels le rapport de volume biométhane produit par volume de biogaz traité est maximum). Généralement, l'unité est conçue pour que cette plage de fonctionnement optimale se trouve entre le régime nominal de l'installation et son régime maximal. Si le flux de biogaz est réparti uniformément entre les unités de séparation membranaire, il existe une large plage de flux de biogaz à traiter ou du flux de biométhane (donnée D) requis sur laquelle les unités de séparation membranaire ne se trouvent pas dans une capacité de fonctionnement permettant un rendement de conversion du méthane optimal.
- La maintenance préventive et curative des équipements, et particulièrement des machines tournantes dont les maintenances se planifient en fonction de leurs heures de fonctionnement, s'en trouve accélérée. Les deux unités fonctionnent en permanence, même dans le cas où une seule unité en fonctionnement permettrait de traiter le biogaz produit, et ce sont donc les composants des deux unités qui s'usent en permanence.

L'algorithme mis en oeuvre dans le processeur P peut alors piloter les unités de séparation membranaire de la manière suivante :
- Tant que le débit du flux de biogaz à traiter ou du flux de biométhane (donnée D) requis par l'exploitant n'est pas supérieur à la valeur seuil, seule la première unité de séparation membranaire est en fonctionnement et reçoit la totalité du flux de biogaz. La deuxième unité de séparation membranaire est à l'arrêt.
- Lorsque le débit du flux de biogaz à traiter ou du flux de biométhane (donnée D) requis par l'exploitant est supérieur à la valeur seuil, la première unité de séparation membranaire A fonctionne au maximum de sa capacité.

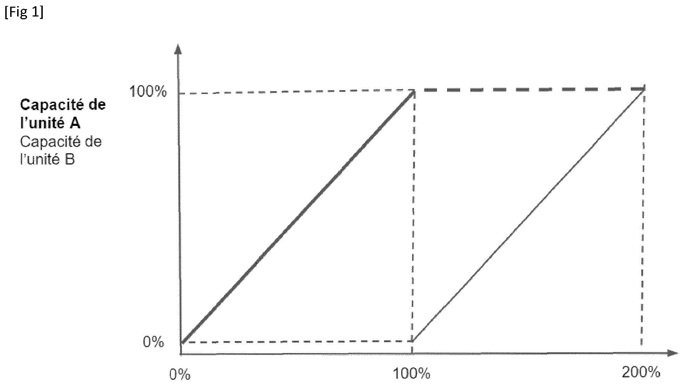

[Fig 1] montre que la capacité locale de la deuxième unité de séparation membranaire B est alors égale à la somme des capacités maximales de fonctionnement des deux unités réduite de 100%.
- l'algorithme ajuste la capacité de fonctionnement des équipements en parallèle par hystérésis. L'hystérésis permet d'éviter les problèmes d'arrêts/démarrages intempestifs des unités de séparation membranaire. On peut par exemple proposer les valeurs suivantes comme paramétrage de base de l'hystérésis pour l'algorithme :
   - lorsque le débit requis par l'exploitant augmente, le démarrage de la deuxième unité de séparation membranaire a lieu lorsque le débit requis est supérieur de 50% par rapport à la valeur seuil. La deuxième unité de séparation membranaire démarre alors avec une capacité de fonctionnement de 50%. Une fois la deuxième unité de séparation membranaire démarrée, sa capacité de fonctionnement correspondra toujours à l'écart en pourcentage par rapport à la valeur seuil ([Fig 1]).
   - lorsque le débit requis par l'exploitant descend :

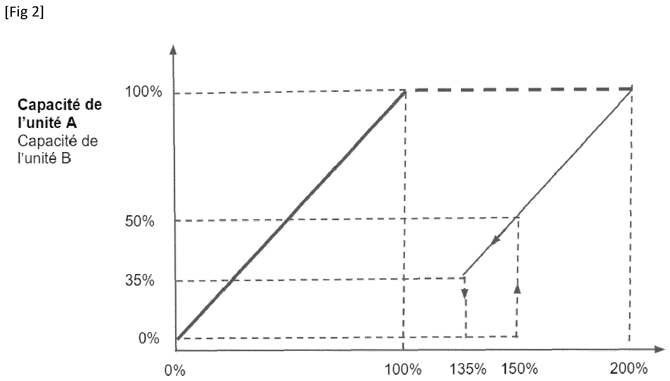

      [Fig 2] montre que l'arrêt de la deuxième unité de séparation membranaire a lieu lorsque le débit requis est supérieur de 35% par rapport à la valeur seuil. Une fois la deuxième unité de séparation membranaire arrêtée, la première unité de séparation membranaire reçoit la totalité du flux de biogaz.

Cet algorithme permet ainsi :
- Un fonctionnement des unités de séparation membranaire à un point de fonctionnement étudié par le fabricant pour que la consommation d'énergie et le rendement de conversion du méthane soient optimisé,
- Sous réserve que l'algorithme permette de changer les rôles de la première unité de séparation membranaire et de la seconde unité de séparation membranaire à la demande de l'exploitant, les périodes de maintenance préventive de chaque unité de séparation membranaire peuvent être optimisées.

## Revendications

1. Dispositif d'ajustement des unités de séparation membranaire d'une installation I de production de biométhane à partir d'un flux de biogaz comprenant du méthane et du dioxyde de carbone, ledit dispositif comprenant :
- Un moyen de commande apte à recevoir au moins une donnée D du flux de biogaz à traiter ou du flux de biométhane et à transmettre cette donnée D sous forme d'un signal à un processeur P du dispositif,
- Le processeur P étant configuré pour exécuter un algorithme pour :
• Comparer la donnée D avec une valeur seuil,
• Déterminer l'écart entre la valeur seuil et la donnée D et
• Ajuster le nombre d'unités de séparation membranaire de même nature en parallèle dans l'installation I en fonction de l'écart déterminé et
• Ajuster la capacité de fonctionnement de chaque unité de séparation membranaire en fonction de l'écart déterminé,
Avec l'algorithme étant configuré pour ajuster la capacité de fonctionnement des unités de séparation membranaire en parallèle par hystérésis.

2. Dispositif selon la revendication 1, **caractérisé en ce que** l'algorithme ajuste le nombre d'unités de séparation membranaire en parallèle dans l'installation I en fonction de l'écart déterminée, en pilotant des ouvertures ou fermetures de vannes dans l'installation I.

3. Dispositif selon l'une des revendications 1 ou 2, **caractérisé en ce que** le moyen de commande comprend des moyens d'affichage configurés pour afficher la donnée D.

4. Dispositif selon la revendication 3, **caractérisé en ce que** le moyen de commande comprend des moyens de saisies permettant à un utilisateur de modifier la donnée D affichée par les moyens d'affichage.

5. Dispositif selon l'une quelconque des revendications 1 à 4, **caractérisé en ce que** l'algorithme est tel que lorsque la donnée D est inférieure à la valeur seuil le nombre d'unités de séparation membranaire en parallèle dans l'installation I est égale à zéro.

6. Dispositif selon l'une quelconque des revendications 1 à 5, **caractérisé en ce que** l'algorithme est tel que lorsque la donnée D est supérieure à la valeur seuil le nombre d'unités de séparation membranaire en parallèle dans l'installation I est supérieur à deux.

7. Dispositif selon la revendication 6, **caractérisé en ce que** l'algorithme est tel que lorsque la donnée D est supérieure de X % par rapport à la valeur seuil, parmi les au moins deux unités de séparation membranaire en parallèle au moins un des deux unités de séparation membranaire fonctionnera à X% tandis que l'autre unité de séparation membranaire fonctionnera à 100%.

8. Procédé d'ajustement des unités de séparation membranaire d'une installation I de production de biométhane à partir d'un flux de biogaz comprenant du méthane et du dioxyde de carbone, ledit procédé utilisant le dispositif selon l'une quelconque des revendications 1 à 7 et comprenant les étapes suivantes:
a) Choisir une donnée D du flux de biogaz à traiter ou du flux de biométhane,
b) Comparer cette donnée D avec une valeur seuil,
c) Déterminer l'écart entre la valeur seuil et la donnée D,
d) Ajuster le nombre d'unités de séparation membranaire en parallèle dans l'installation I en fonction de l'écart déterminée, et
e) Ajuster la capacité de fonctionnement de chaque unité de séparation membranaire en fonction de l'écart déterminé.

9. Procédé selon la revendication 8, **caractérisé en ce que** la donnée D correspond au débit du flux de biogaz à traiter ou du flux de biométhane.

## Patentansprüche

1. Vorrichtung zur Einstellung der Membrantrenneinheiten einer Anlage I zur Erzeugung von Biomethan aus einem Biogasfluss, der Methan und Kohlendioxid umfasst, wobei die Vorrichtung umfasst:
- ein Steuerungsmittel, das geeignet ist, mindestens ein Datenelement D des zu behandelnden Biogasflusses oder des Biomethanflusses zu empfangen und dieses Datenelement D in Form eines Signals an einen Prozessor P der Vorrichtung zu übertragen,
- wobei der Prozessor P dafür ausgelegt ist, einen Algorithmus auszuführen zum:
• Vergleichen des Datenelements D mit einem Schwellenwert,
• Bestimmen des Abstands zwischen dem Schwellenwert und dem Datenelement D und
• Einstellen der Anzahl der parallel arbeitenden Membrantrenneinheiten derselben Art in der Anlage I in Abhängigkeit von dem bestimmten Abstand, und
• Einstellen der Betriebskapazität jeder Membrantrenneinheit in Abhängigkeit von dem bestimmten Abstand,
wobei der Algorithmus dafür ausgelegt ist, die Betriebskapazität der parallel arbeitenden Membrantrenneinheiten durch Hysterese einzustellen.

2. Vorrichtung nach Anspruch 1, **dadurch gekennzeichnet, dass** der Algorithmus die Anzahl der parallel arbeitenden Membrantrenneinheiten in der Anlage I in Abhängigkeit von dem bestimmten Abstand einstellt, indem er Öffnungs- oder Schließvorgänge von Ventilen in der Anlage I steuert.

3. Vorrichtung nach einem der Ansprüche 1 oder 2, **dadurch gekennzeichnet, dass** das Steuerungsmittel Anzeigemittel umfasst, die dafür ausgelegt sind, das Datenelement D anzuzeigen.

4. Vorrichtung nach Anspruch 3, **dadurch gekennzeichnet, dass** das Steuerungsmittel Erfassungsmittel umfasst, die einem Benutzer ermöglichen, das von den Anzeigemitteln angezeigte Datenelement D zu ändern.

5. Vorrichtung nach einem der Ansprüche 1 bis 4, **dadurch gekennzeichnet, dass** der Algorithmus so beschaffen ist, dass, wenn das Datenelement D kleiner als der Schwellenwert ist, die Anzahl der parallel arbeitenden Membrantrenneinheiten in der Anlage I gleich null ist.

6. Vorrichtung nach einem der Ansprüche 1 bis 5, **dadurch gekennzeichnet, dass** der Algorithmus so beschaffen ist, dass, wenn das Datenelement D größer als der Schwellenwert ist, die Anzahl der parallel arbeitenden Membrantrenneinheiten in der Anlage I größer als zwei ist.

7. Vorrichtung nach Anspruch 6, **dadurch gekennzeichnet, dass** der Algorithmus so beschaffen ist, dass, wenn das Datenelement D um X % größer als der Schwellenwert ist, von den mindestens zwei parallel arbeitenden Membrantrenneinheiten mindestens eine der zwei Membrantrenneinheiten mit X % arbeiten wird, während die andere Membrantrenneinheit mit 100 % arbeiten wird.

8. Verfahren zur Einstellung der Membrantrenneinheiten einer Anlage I zur Erzeugung von Biomethan aus einem Biogasfluss, der Methan und Kohlendioxid umfasst, wobei das Verfahren eine Vorrichtung nach einem der Ansprüche 1 bis 7 verwendet und die folgenden Schritte umfasst:
a) Wählen eines Datenelements D des zu behandelnden Biogasflusses oder des Biomethanflusses,
b) Vergleichen dieses Datenelements D mit einem Schwellenwert,
c) Bestimmen des Abstands zwischen dem Schwellenwert und dem Datenelement D,
d) Einstellen der Anzahl der parallel arbeitenden Membrantrenneinheiten in der Anlage I in Abhängigkeit von dem bestimmten Abstand, und
e) Einstellen der Betriebskapazität jeder Membrantrenneinheit in Abhängigkeit von dem bestimmten Abstand.

9. Verfahren nach Anspruch 8, **dadurch gekennzeichnet, dass** das Datenelement D dem Durchsatz des zu behandelnden Biogasflusses oder des Biomethanflusses entspricht.

## Claims

1. Device for adjusting the membrane separation units of a plant I for producing biomethane from a biogas flow comprising methane and carbon dioxide, said device comprising:
- a control means that is able to receive at least one datum D of the biogas flow to be treated or of the biomethane flow and to transmit this datum D in the form of a signal to a processor P of the device,
- the processor P being configured to execute an algorithm to:
• compare the datum D with a threshold value,
• determine the difference between the threshold value and the datum D and
• adjust the number of membrane separation units of the same nature in parallel in the plant I as a function of the determined difference and
• adjust the operating capacity of each membrane separation unit as a function of the determined difference,
with the algorithm being configured to adjust the operating capacity of the membrane separation units in parallel by hysteresis.

2. Device according to Claim 1, **characterized in that** the algorithm adjusts the number of membrane separation units in parallel in the plant I as a function of the determined difference, driving openings or closures of valves in the plant I.

3. Device according to either of Claims 1 and 2, **characterized in that** the control means comprises display means configured to display the datum D.

4. Device according to Claim 3, **characterized in that** the control means comprises input means allowing a user to modify the datum D displayed by the display means.

5. Device according to any one of Claims 1 to 4, **characterized in that** the algorithm is such that when the datum D is lower than the threshold value the number of membrane separation units in parallel in the plant I is equal to zero.

6. Device according to any one of Claims 1 to 5, **characterized in that** the algorithm is such that when the datum D is greater than the threshold value the number of membrane separation units in parallel in the plant I is greater than two.

7. Device according to Claim 6, **characterized in that** the algorithm is such that when the datum D is greater by X% with respect to the threshold value, out of the at least two membrane separation units in parallel at least one of the two membrane separation units will operate at X% while the other membrane separation unit will operate at 100%.

8. Method for adjusting the membrane separation units of a plant I for producing biomethane from a biogas flow comprising methane and carbon dioxide, said method using the device according to any one of Claims 1 to 7 and comprising the following steps:
a) choosing a datum D of the biogas flow to be treated or of the biomethane flow,
b) comparing this datum D with a threshold value,
c) determining the difference between the threshold value and the datum D,
d) adjusting the number of membrane separation units in parallel in the plant I as a function of the determined difference, and
e) adjusting the operating capacity of each membrane separation unit as a function of the determined difference.

9. Method according to Claim 8, **characterized in that** the datum D corresponds to the flow rate of the biogas flow to be treated or of the biomethane flow.
